# EUROPEAN PATENT SPECIFICATION

(11) **EP 2 551 478 B1**
(45) Date of publication and mention of the grant of the patent: **21.09.2016**
(21) Application number: 11759366.5
(22) Date of filing: 22.03.2011
(51) Int. Cl.: F01K 23/10, F01D 15/08, F01D 15/10, F01K 23/06, F02G 5/00, F02G 5/02, F02G 5/04, H02K 16/02, F01K 23/14, F01N 5/02

(54) **SYSTEM FOR UTILIZING WASTE HEAT OF INTERNAL COMBUSTION ENGINE**
SYSTEM ZUR VERWENDUNG DER ABWÄRME EINES VERBRENNUNGSMOTORS
SYSTÈME PERMETTANT D'UTILISER LA CHALEUR RÉSIDUELLE D'UN MOTEUR À COMBUSTION INTERNE

(30) Priority: 24.03.2010 JP 2010067989
(43) Date of publication of application: 30.01.2013
(73) Proprietor: Sanden Holdings Corporation, Gunma 372-8502 (JP)
(72) Inventor: WADA, Hirofumi, Isesaki-shi Gunma 372-8502 (JP); KASUYA, Junichiro, Isesaki-shi Gunma 372-8502 (JP); NAKAMURA, Shinji, Isesaki-shi Gunma 372-8502 (JP); TSUKAMOTO, Kou, Isesaki-shi Gunma 372-8502 (JP); NAGAI, Hiroyuki, Yokohama-shi Kanagawa 220-8623 (JP)
(74) Representative: Michalski Hüttermann & Partner Patentanwälte mbB
(86) International application number: PCT/JP2011/056756
(87) International publication number: WO 2011/118561

(56) References cited:
- EP-A2- 1 117 173
- EP-A2- 1 342 603
- WO-A1-97/47068
- WO-A1-2008/082388
- JP-A- 11 275 826
- JP-A- H11 275 826
- JP-A- 2006 170 185
- JP-A- 2010 185 417
- US-A1- 2004 258 539
- US-A1- 2006 254 309

## Description

### Technical Field

The present invention relates to a waste heat utilization system for an internal combustion engine and a motor-generator device comprised in the system. More particularly, the present invention relates to a waste heat utilization system suited for recovering and utilizing waste heat of an internal combustion engine of a motor vehicle, and a motor-generator device comprised in the system.

### Background Art

This type of waste heat utilization system is provided with a Rankine cycle including a circulation path for a refrigerant as a working fluid, in which are sequentially inserted an evaporator for heating and evaporating the working fluid by waste heat of the internal combustion engine, an expander for expanding the highpressure working fluid supplied from the evaporator, to generate rotary driving force, a driving force receiving device to which the rotary driving force generated by the expander is transmitted, a condenser for condensing the working fluid supplied from the expander, and a pump for delivering, to the evaporator, the working fluid supplied from the condenser.

A fluid machine has been known in which a pump, an expander, and a motor-generator as the driving force receiving device are coaxially arranged, and the motor-generator is caused to function as a motor to rotate the pump when the Rankine cycle is started, and is caused to function as an electric generator after the expander begins to rotate spontaneously because of circulation of the refrigerant (Patent Document 1).

### Prior Art Documents

### Patent Documents

Patent Document 1: Japanese Laid-open Patent Publication No. 2005-30386. Furthermore, a waste heat utilization system comprising a fluid machine is disclosed in document US2004/0258539A1, representing the closest prior art.
Further, a rotating machine is disclosed in JPH11275826A. A motor/generator is disclosed in the EP1117173A2. A differential motor/ generator apparatus is disclosed in the WO97/47068A1. A fluid machine is also disclosed in US2006/0254309 A1 and a power split device for a combined heat and power system is disclosed in WO2008/082388A1.

### Summary of the Invention

### Problems to be Solved by the Invention

According to the technique disclosed in Patent Document 1, the motor-generator is configured to function as a motor for driving the pump and also to function as an electric generator when the expander is operating. However, in a situation where the outside air temperature is high as in the summertime, the condensation temperature rises and the expansion ratio decreases as a result, giving rise to a problem that the turning force of the expander alone is insufficient to cause the motor-generator as the electric generator to generate the electric power demanded by the vehicle.

To secure the electric power demanded by the vehicle, an alternator driven by the internal combustion engine may be separately provided in the vehicle, as in conventional vehicles.

It is not desirable, however, that a single vehicle be provided with two electric generators, namely, a motor-generator and an alternator conventionally used, because the use of the two electric generators requires an extra installation space and leads to increase in weight and cost.

On the other hand, when the amount of air passing through the condenser is large as in the case where the vehicle is traveling at high speeds, the condensation temperature lowers and the expansion ratio increases. In such case, the electric power generated by the motor-generator is not fully used and some of the generated electric power undesirably remains unused.

A waste heat utilization system is conceivable wherein, for example, the internal combustion engine is used as the driving force receiving device, the rotary driving force of the expander is transmitted directly to the internal combustion engine through an endless belt or the like, and the rotary driving force of the expander and of the internal combustion engine is transmitted also to an alternator arranged coaxially with or separately from the expander.

With such configuration, the rotary driving force of the expander can be transmitted to the internal combustion engine, and electric power can be generated using both the rotary driving force of the expander and that of the internal combustion engine by just providing the additional alternator.

However, if the system is configured such that the rotary driving force of the expander is transmitted directly to the internal combustion engine through an endless belt or the like, the internal combustion engine and the expander rotate synchronously with each other. Thus, when the rotating speed of the internal combustion engine is high compared to the rotation of the expander, the internal combustion engine forcedly increases the amount of discharge of the working fluid from the expander, so that the pressure of the working fluid on the upstream side of the expander cannot be kept high, giving rise to a problem that the output of the expander lowers. That is, when the rotating speed of the internal combustion engine is high compared with the rotation of the expander, the rotary driving force of the expander fails to be transmitted to the internal combustion engine or the alternator in a desirable manner, posing a problem of poor efficiency.

The present invention was created in view of the above circumstances, and an object thereof is to provide a waste heat utilization system for an internal combustion engine, which is provided with a Rankine cycle for circulating a working fluid therethrough to enable an expander to generate rotary driving force and in which the driving force of the internal combustion engine can be efficiently assisted by rotational energy of the expander with zero waste and also electric power can be efficiently generated using the rotary driving force of the expander and of the internal combustion engine, and a motor-generator device used in the system.

### Means for Solving the Problems

To achieve the above object, the present invention provides a waste heat utilization system for an internal combustion engine, comprising all features of independent claim 1, inter alia:
a Rankine cycle including a circulation path for a working fluid, in which are sequentially inserted an evaporator configured to heat and evaporate the working fluid by waste heat of the internal combustion engine, an expander configured to expand the working fluid supplied from the evaporator, to generate rotary driving force, a condenser configured to condense the working fluid supplied from the expander, and a pump configured to deliver, to the evaporator, the working fluid supplied from the condenser; and a motor-generator including an inner rotor and an outer rotor located inside and outside, respectively, of a stator thereof, wherein at least the motor-generator and the expander are coupled to each other with either one of the inner and outer rotors of the motor-generator coupled to a rotary shaft of the expander, and the other of the inner and outer rotors is coupled to a rotary shaft of the internal combustion engine.

Preferably, the other of the inner and outer rotors is coupled to the rotary shaft of the internal combustion engine with an auxiliary machine connected in series or parallel with the other of the inner and outer rotors.

Preferably, the waste heat utilization system further comprises a refrigeration cycle including a circulation path for a refrigerant, in which is inserted a compressor configured to compress the refrigerant by using at least rotary driving force of the internal combustion engine, and the auxiliary machine is the compressor.

Preferably, the compressor is a variable capacity type compressor, and the waste heat utilization system further comprises a compression capacity control unit configured to variably control a compression capacity of the variable capacity type compressor in accordance with operating conditions of the refrigeration cycle.

Preferably, an engagement-disengagement clutch is arranged between the internal combustion engine and the compressor and configured to establish and cut off transmission of rotary driving force from the motor-generator to the internal combustion engine through the compressor in accordance with an operating state of the internal combustion engine.

Preferably, in this case, the expander and the pump are coaxially coupled together into a unified body, the motor-generator and the unified body of the expander and the pump are coupled to each other with the one of the inner and outer rotors coupled to a rotary shaft of the unified body of the expander and the pump, and the other of the inner and outer rotors is coupled to the rotary shaft of the internal combustion engine.

Preferably, the waste heat utilization system further comprises: an electric power recovery unit including a battery configured to store electric power generated by the motor-generator as a result of rotation of the expander or the internal combustion engine; and a system control unit configured to control a degree of recovery of electric power in accordance with a charge amount of the battery.

Preferably, the electric power recovery unit includes a Rankine output detection unit configured to detect a Rankine output generated by the Rankine cycle, a battery charge amount detection unit configured to detect the charge amount of the battery, and a motor-generator output variable unit configured to switch a function of each of the inner and outer rotors of the motor-generator between a motor function and a generator function; the system control unit includes a battery demanded electric power calculation unit configured to calculate battery demanded electric power demanded by the electric power recovery unit, and a motor-generator control unit configured to control the motor-generator output variable unit in accordance with the battery demanded electric power calculated by the battery demanded electric power calculation unit; and the system control unit controls the motor-generator control unit in such a manner that the function of the other of the inner and outer rotors is switched to the generator function by the motor-generator output variable unit when the battery demanded electric power calculated by the battery demanded electric power calculation unit is higher than electric power corresponding to the Rankine output detected by the Rankine output detection unit, and is switched to the motor function by the motor-generator output variable unit when the battery demanded electric power is lower than the electric power corresponding to the Rankine output.

Preferably, the motor-generator control unit controls the motor-generator in accordance with a generator output target value when the function of the other of the inner and outer rotors is switched to the generator function, and controls the motor-generator output variable unit in accordance with a motor output target value when the function of the other of the inner and outer rotors is switched to the motor function, and the generator output target value and the motor output target value are each set based on an absolute value of a difference between the battery demanded electric power and the electric power corresponding to the Rankine output.

Preferably, the Rankine cycle includes an electrically driven auxiliary machine, the system control unit further includes a Rankine cycle electric auxiliary input control unit configured to control input electric power to the electrically driven auxiliary machine of the Rankine cycle, and the system control unit causes the Rankine cycle electric auxiliary input control unit to stop operation of the electrically driven auxiliary machine of the Rankine cycle when the electric power corresponding to the Rankine output detected by the Rankine output detection unit is lower at least than the input electric power to the electrically driven auxiliary machine of the Rankine cycle, and causes the Rankine cycle electric auxiliary input control unit to operate the electrically driven auxiliary machine of the Rankine cycle when the electric power corresponding to the Rankine output is higher at least than the input electric power to the electrically driven auxiliary machine of the Rankine cycle.

Preferably, in this case, the expander and the pump are coaxially coupled together into a unified body, the motor-generator and the unified body of the expander and the pump are coupled to each other with the one of the inner and outer rotors coupled to a rotary shaft of the unified body of the expander and the pump, and the other of the inner and outer rotors is coupled to the rotary shaft of the internal combustion engine.

Preferably, the motor-generator control unit controls the motor-generator output variable unit so as to switch the function of the one of the inner and outer rotors to the motor function or the generator function, and the system control unit controls the motor-generator control unit in such a manner that the function of the one of the inner and outer rotors is switched to the generator function by the motor-generator output variable unit when the Rankine output detected by the Rankine output detection unit is higher than or equal to a fixed value, and is switched to the motor function by the motor-generator output variable unit when the Rankine output is lower than the fixed value.

The present invention also provides a motor-generator device comprised in a waste heat utilization system for an internal combustion engine, comprising at least all features of independent claim 1, the waste heat utilization system including a Rankine cycle having a circulation path for a working fluid, in which are sequentially inserted an evaporator configured to heat and evaporate the working fluid by waste heat of the internal combustion engine, an expander configured to expand the working fluid supplied from the evaporator, to generate rotary driving force, a condenser configured to condense the working fluid supplied from the expander, and a pump configured to deliver, to the evaporator, the working fluid supplied from the condenser, the motor-generator device comprising: a motor-generator mechanism including an inner rotor and an outer rotor located inside and outside, respectively, of a stator thereof; the expander; and an input-output shaft coupled to a rotary shaft of the internal combustion engine, wherein either one of the inner and outer rotors of the motor-generator mechanism is coupled to a rotary shaft of the expander, and the other of the inner and outer rotors is coupled to the input-output shaft.

Preferably, in the motor-generator device, the pump of the Rankine cycle is arranged between the motor-generator mechanism and the expander, and the pump has a drive shaft of which one end is coupled to the expander and of which the other end is coupled to the one of the inner and outer rotors.

Preferably, in this case, a one-way clutch is interposed between the pump and the expander and configured not to transmit rotary driving force from the pump to the expander but to transmit rotary driving force from the expander to the pump.

### Advantageous Effects of the Invention

The waste heat utilization system according to the present invention, as defined by appended independent claim 1, is inter alia provided with the Rankine cycle and the motor-generator having the inner and outer rotors located inside and outside, respectively, of the stator. The motor-generator and the expander of the Rankine cycle are connected to each other with either one of the inner and outer rotors coupled to the rotary shaft of the expander, and the other of the inner and outer rotors is coupled to the rotary shaft of the internal combustion engine.

Accordingly, the waste heat utilization system can be configured so as to be compact in size to save space, and also since the rotary shafts of the internal combustion engine and expander are coupled to the respective rotors of the motor-generator, the driving force of the internal combustion engine or the turning force of the expander can be converted to electric power. Thus, even in a situation where the outside air temperature is high as in the summertime, the electric power demanded by the vehicle can be satisfactorily generated by the motor-generator. Also, the rotary shaft of the internal combustion engine and the expander are coupled through the motor-generator, and therefore, even if a rotating speed derived from the driving force of the internal combustion engine is higher than that of the expander, the expander is not adversely affected and the pressure of the working fluid on the upstream side of the expander can be kept high, making it possible to assist the driving force of the internal combustion engine by the rotational energy of the expander through the motor-generator.

With the waste heat utilization system of the present invention, even in cases where an auxiliary machine is coupled to the motor-generator, sufficient electric power can be generated by the motor-generator while saving space, and the driving force of the internal combustion engine can assisted by the rotational energy of the expander through the motor-generator.

Also, in the waste heat utilization system of the present invention including the Rankine cycle and the refrigeration cycle, even in cases where the compressor of the refrigeration cycle is coupled to the motor-generator, sufficient electric power can be generated by the motor-generator while at the same time saving space, and the driving force of the internal combustion engine can assisted by the rotational energy of the expander through the motor-generator.

In the waste heat utilization system of the present invention, the compressor is a variable capacity type compressor, and the compression capacity of the variable capacity type compressor is variably controlled by the compression capacity control unit in accordance with operating conditions of the refrigeration cycle. Thus, when the demand for operation of the refrigeration cycle is low or zero, the compression capacity can be lowered or reduced to zero so that the compressor may not apply an unnecessary load, and the driving force of the internal combustion engine can assisted by the rotational energy of the expander through the motor-generator.

Also, in the waste heat utilization system of the present invention, the engagement-disengagement clutch is disengaged at the time of idling-stop of the internal combustion engine, for example, to enable the compressor to keep operating by driving the motor-generator by using the electric power stored in the battery, whereby the refrigeration cycle and thus the air conditioner can be continuously operated.

Further, in the waste heat utilization system of the present invention, the pump can be driven by using the rotational energy of the expander and also can be driven by the motor function of the motor-generator when the Rankine cycle is started, so that the working fluid can be supplied appropriately to the expander.

In the waste heat utilization system of the present invention, the electric power generated by the motor-generator as a result of the rotation of the expander or the internal combustion engine is recovered by the electric power recovery unit and stored in the battery.

The degree of recovery of electric power is controlled by the system control unit in accordance with the charge amount of the battery, namely, the battery demanded electric power, and therefore, the electric power generated by the motor-generator can be efficiently recovered and utilized.

In the waste heat utilization system of the present invention, the electric power recovery unit includes the Rankine output detection unit configured to detect the Rankine output generated by the Rankine cycle, the battery charge amount detection unit configured to detect the charge amount of the battery, and the motor-generator output variable unit configured to switch the function of each of the inner and outer rotors of the motor-generator between the motor function and the generator function. The system control unit includes the battery demanded electric power calculation unit configured to calculate the battery demanded electric power demanded by the electric power recovery unit, and the motor-generator control unit configured to control the motor-generator output variable unit in accordance with the battery demanded electric power calculated by the battery demanded electric power calculation unit. The system control unit controls the motor-generator control unit in such a manner that the function of the other of the inner and outer rotors is switched to the generator function by the motor-generator output variable unit when the battery demanded electric power calculated by the battery demanded electric power calculation unit is higher than the electric power corresponding to the Rankine output detected by the Rankine output detection unit, and is switched to the motor function by the motor-generator output variable unit when the battery demanded electric power is lower than the electric power corresponding to the Rankine output. Accordingly, the function of the motor-generator can be efficiently switched between the generator function and the motor function in accordance with the battery demanded electric power and the electric power generated by the motor-generator and corresponding to the Rankine output, for example.

In the waste heat utilization system of the present invention, the generator output target value and the motor output target value are each set based on an absolute value of the difference between the battery demanded electric power and the electric power corresponding to the Rankine output. When the function of the other of the inner and outer rotors is switched to the generator function, the motor-generator is controlled in accordance with the generator output target value, and when the function of the other of the inner and outer rotors is switched to the motor function, the motor-generator is controlled in accordance with the motor output target value. Accordingly, the other of the inner and outer rotors can be properly operated as a generator or a motor .

In the waste heat utilization system of the present invention, when the electric power corresponding to the Rankine output is lower at least than the input electric power to the Rankine cycle electric auxiliary machine for air-cooling the condenser, operation of the Rankine cycle electric auxiliary machine is stopped, and when the electric power corresponding to the Rankine output is higher at least than the input electric power to the Rankine cycle electric auxiliary machine, the Rankine cycle electric auxiliary machine is operated. It is therefore possible to prevent energy loss in the Rankine cycle.

Also, in the waste heat utilization system according to the present invention, the system control unit permits the electric power generated by the motor-generator to be efficiently recovered and utilized, and the pump can be driven using the rotational energy of the expander. In addition, the pump can be driven by the motor function of the motor-generator when the Rankine cycle is started. Consequently, the working fluid can be appropriately supplied to the expander.

In the waste heat utilization system of the present invention, when the Rankine output is higher than or equal to the fixed value, the function of the one of the inner and outer rotors is switched to the generator function, and when the Rankine output is lower than the fixed value, the function of the one of the inner and outer rotors is switched to the motor function. Thus, the pump can be made to operate independently with a minimum input, and the working fluid can be appropriately supplied to the expander to start the Rankine cycle.

The motor-generator device of the present invention is comprised in a waste heat utilization system, comprising at least all features of independent claim 1, intended for an internal combustion engine and including a Rankine cycle, and comprises inter alia:
the motor-generator mechanism including the inner and outer rotors located inside and outside, respectively, of the stator; the expander; and the input-output shaft coupled to the rotary shaft of the internal combustion engine, wherein either one of the inner and outer rotors of the motor-generator mechanism is coupled to the rotary shaft of the expander, and the other of the inner and outer rotors is coupled to the input-output shaft

Accordingly, the motor-generator device can be configured so as to be compact in size to save space, and also since the input-output shaft and the expander are coupled to the respective rotors of the motor-generator mechanism, the driving force of the internal combustion engine or the turning force of the expander can be converted to electric power. Thus, even in a situation where the outside air temperature is high as in the summertime, the electric power demanded by the vehicle can be satisfactorily generated by the motor-generator mechanism. Also, the input-output shaft and the expander are coupled through the motor-generator mechanism, and therefore, even if the rotating speed derived from the driving force of the internal combustion engine is higher than that of the expander, the expander is not adversely affected and the pressure of the working fluid on the upstream side of the expander can be kept high, making it possible to assist the driving force of the internal combustion engine by the rotational energy of the expander through the motor-generator mechanism.

Also, in the motor-generator device of the present invention, the pump can be driven by using the rotational energy of the expander and also can be driven by the motor function of the motor-generator mechanism when the Rankine cycle is started, so that the working fluid can be supplied appropriately to the expander.

Further, in the motor-generator device of the present invention, the expander can be prevented from applying an unnecessary load on the motor-generator mechanism when the pump is driven by the motor function of the motor-generator mechanism.

### Brief Description of the Drawings

FIG. 1 is a schematic diagram illustrating a waste heat utilization system for an internal combustion engine according to a first embodiment of the present invention.
FIG. 2 is a flowchart illustrating a system control routine for the waste heat utilization system according to the first embodiment of the present invention.
FIG. 3 is a schematic diagram illustrating a waste heat utilization system for an internal combustion engine according to a second embodiment of the present invention.
FIG. 4 is a longitudinal sectional view of a fluid machine constituted by a pump and an expander unified into one body.
FIG. 5 is a flowchart illustrating a system control routine for the waste heat utilization system according to the second embodiment of the present invention.
FIG. 6 is a schematic diagram illustrating a waste heat utilization system for an internal combustion engine according to a third embodiment of the present invention.
FIG. 7 is a longitudinal sectional view of a compressor.
FIG. 8 is a schematic diagram illustrating a waste heat utilization system for an internal combustion engine according to a fourth embodiment of the present invention.

### Mode of Carrying out the Invention

Embodiments of the present invention will be described below with reference to the accompanying drawings.

A first embodiment will be described first.

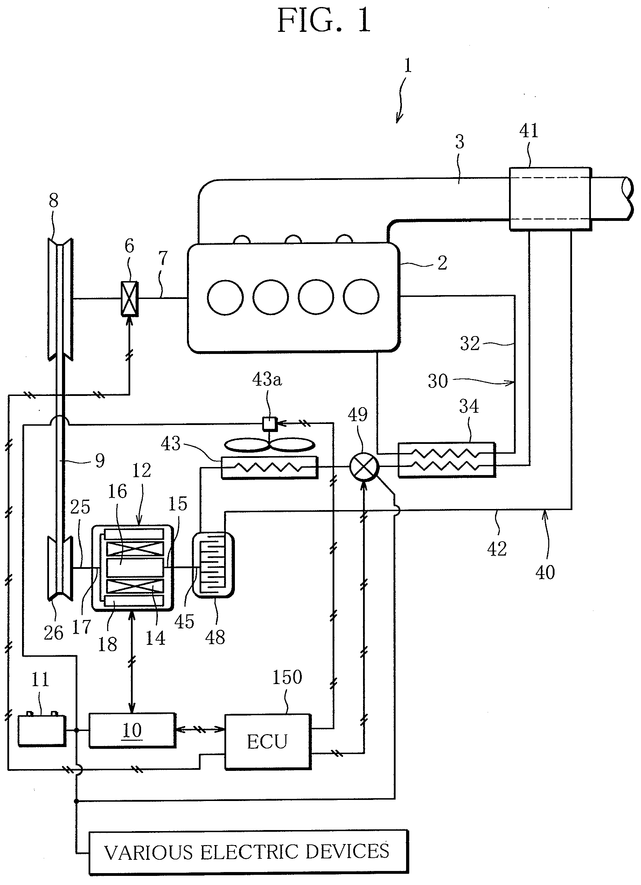

FIG. 1 schematically illustrates a waste heat utilization system for an internal combustion engine according to the first embodiment of the present invention.

The waste heat utilization system 1 is mounted on a motor vehicle, for example, and comprises an engine (internal combustion engine) 2, an electric power recovery circuit 10, a cooling water circuit 30, and a Rankine circuit (Rankine cycle) 40.

The electric power recovery circuit (electric power recovery unit) 10 is an electric circuit which recovers electric power generated by a generator function of a motor-generator 12 and then stores the recovered electric power in a battery (storage battery) 11, and which also detects electric power generated by an expander-side rotor, out of the expander- and output-side rotors of the motor-generator 12, and a charge amount (SOC) of the battery (Rankine output detection unit, battery charge amount (SOC) detection unit). Further, the electric power recovery circuit 10 is capable of switching the function of each of the rotors of the motor-generator 12 between a motor function and a generator function and varying individual motor outputs and individual generator loads (motor-generator output variable unit). The electric power recovered by the electric power recovery circuit 10 is used for driving various electric devices of the vehicle, for example.

The electric power recovery circuit 10 is connected to an electronic control unit (system control unit) (ECU) 150. The ECU 150 calculates a battery demanded electric power amount (battery demanded electric power calculation unit) on the basis of a change, that is, increase or decrease, of the charge amount (SOC), for example, and appropriately controls the degree of recovery of electric power to the battery 11, and the like by switching the function of each rotor of the motor-generator 12 between the motor function and the generator function through the electric power recovery circuit 10 (motor-generator control unit). Also, the ECU 150 appropriately controls an electric pump 49 and an electric fan 43a (Rankine cycle electric auxiliary input control unit), which are electrically driven auxiliary machines of the Rankine circuit 40, described later. Accordingly, the electric power recovery circuit 10 can efficiently recover and utilize the electric power generated by the motor-generator 12.

The motor-generator (motor-generator mechanism) 12 has an inner rotor (one rotor) 16 located inside a stator 14 and an outer rotor (other rotor) 18 located outside the stator 14, as shown in FIG. 1. Rotary shafts 15 and 17 extend in directions opposite to each other and are coupled to the inner and outer rotors 16 and 18, respectively.

The motor-generator 12 configured as above is capable of causing each of the inner and outer rotors 16 and 18 to function as both a generator and a motor as desired, in accordance with a compound current passed through the stator 14, rotation of the inner rotor 16 by the rotary shaft 15, and rotation of the outer rotor 18 by the rotary shaft 17. The structure of the motor-generator 12 is described in detail in, for example, Japanese Laid-open Patent Publication No. 11-275826, and therefore, description thereof is omitted.

The cooling water circuit 30 includes a cooling water circulation path 32 communicating with a cooling water passage of the engine 2. A cooling water heat exchanger (evaporator) 34, a radiator, not shown, a thermostat, not shown, a water pump, not shown, and the like are inserted in the circulation path 32 in the mentioned order as viewed in the flowing direction of the cooling water, to constitute a closed circuit for cooling the engine 2.

The Rankine circuit 40 includes a circulation path 42 for a working fluid. The cooling water heat exchanger 34, an exhaust gas heat exchanger 41, an expander 48 for generating rotary driving force by expanding the working fluid which has been heated to a superheated state by the cooling water heat exchanger 34 and the exhaust gas heat exchanger 41, a Rankine condenser (condenser) 43, an electric pump (Rankine cycle electrically driven auxiliary machine) 49 and the like are inserted in the circulation path 42 in the mentioned order as viewed in the flowing direction of the working fluid, to constitute a closed circuit. At the cooling water heat exchanger 34, heat is transferred from the cooling water circulated through the cooling water circuit 30 to the working fluid, and at the exhaust gas heat exchanger 41, heat is transferred from the exhaust gas flowing through an exhaust pipe 3 of the engine 1 to the working fluid, thereby recovering waste heat of the engine 2. The electric pump 49 is connected to the ECU 150.

The expander 48 is a scroll type expander and has a scroll unit accommodated in a housing thereof.

The motor-generator 12 and the expander 48 of the Rankine circuit 40 are connected to each other, as shown in FIG. 1, with the rotary shaft 15 of the motor-generator 12 coaxially rotatably coupled to a rotary shaft 45 of the expander 48. An endless belt 9 is passed around a pulley 26 with a rotary shaft 25 and a pulley 8 of a crankshaft 7 of the engine 2, and the rotary shaft 17 of the motor-generator 12 is coupled to the crankshaft 7 of the engine 2 through the rotary shaft (input-output shaft) 25 and the pulley 26 so that the rotary shaft 17 and the crankshaft 7 can rotate synchronously with each other.

The motor-generator 12, the expander 48 and the rotary shaft 25 constitute a motor-generator device.

Also, an engagement-disengagement clutch 6 is interposed between the crankshaft 7 of the engine 2 and the pulley 8, as illustrated in FIG. 1. The engagement-disengagement clutch 6 is connected to the ECU 150.

The Rankine condenser 43 is provided with an electric fan (Rankine cycle electrically driven auxiliary machine) 43a for air-cooling the Rankine condenser 43. The electric fan 43a also is connected to the ECU 150.

Operation of the waste heat utilization system of the first embodiment of the present invention, configured as described above, will be now described.

In the waste heat utilization system of the present invention, the motor-generator 12 can function as both a generator and a motor as needed, in accordance with the compound current passed through the stator 14, the rotation of the inner rotor 16 by the rotary shaft 15, and the rotation of the outer rotor 18 by the rotary shaft 17, as stated above. Whether the outer rotor 18 performs the generator function or the motor function depends mainly upon the amount of electric power (Rankine output) generated by the rotation of the motor-generator 12 by the rotary driving force of the expander 48, that is, the amount of electric power generated by the rotation of the inner rotor 16, and the battery demanded electric power calculated by the ECU 150.

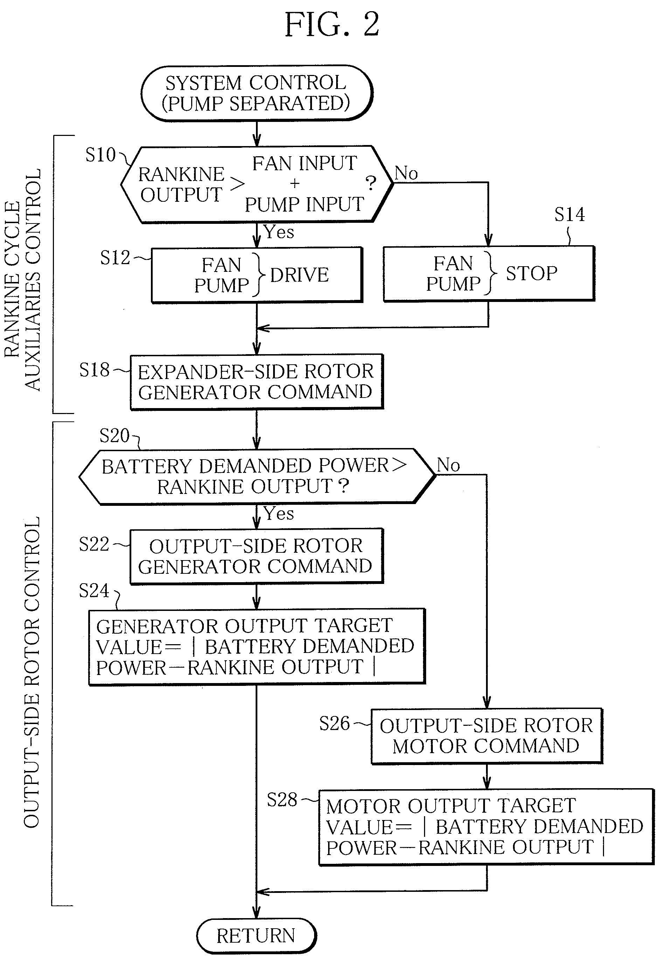

FIG. 2 is a flowchart illustrating a system control routine for the waste heat utilization system of the first embodiment of the present invention, executed by the ECU 150. Referring to the flowchart, system control of the waste heat utilization system of the first embodiment, as well as control of switchover between the generator function and the motor function of the motor-generator 12, will be explained in detail.

In Step S10, it is determined whether or not the Rankine output is higher than the input to the electric fan 43a plus the input to the electric pump 49, which are electrically driven auxiliary machines. In practice, it is determined whether or not the generated electric power detected from the motor-generator 12 via the electric power recovery circuit 10 and corresponding to the Rankine output, for example, the amount of electric power generated by the rotation of the inner rotor 16 by the expander 48, is higher than the input electric power to the electric fan 43a plus the input electric power to the electric pump 49, both determined on the basis of information on vehicle speed, outside air temperature and the like. If the decision is "True" ("Yes"), the control routine proceeds to Step S12 to drive the electric fan 43a and the electric pump 49, and then to Step S18. On the other hand, if the decision is "False" ("No"), the control routine proceeds to Step S14 to stop the electric fan 43a and the electric pump 49, and then to Step S18.

That is, when the Rankine output is lower than the input to the electric fan 43a plus the input to the electric pump 49, the total input to the electric fan 43a and the electric pump 49 is higher than the Rankine output in the Rankine circuit 40, and since energy loss is being caused, the electric fan 43a and the electric pump 49 are stopped. It is therefore possible to prevent energy loss from being caused in the Rankine circuit 40.

In Step S18, an expander-side rotor generator command is sent to the electric power recovery circuit 10 to alter the characteristics of the compound current passed through the stator 14 such that the inner rotor 16, which is the expander-side rotor, operates as a generator. Specifically, if the inner rotor 16 is functioning as a motor circuit, the electric power recovery circuit 10 switches the electric circuit to a generator circuit. At this time, the load of the motor-generator 12 is controlled so that the rotary driving force of the expander 48 may be optimized. More specifically, the amount of electric current flow is adjusted.

In Step S20, it is determined whether or not the battery demanded electric power calculated by the ECU 150 is higher than electric power corresponding to the aforementioned Rankine output, for example, the amount of electric power generated by the rotation of the inner rotor 16 by the expander 48. If the decision is "True" ("Yes"), the control routine proceeds to Step S22, in which an output-side rotor generator command is sent so that the outer rotor 18, which is the output-side rotor, may be caused to function as a generator.

For example, when the engine 2 in a cold state is started and is still not warmed up, the expander 48 is unable to generate rotary driving force sufficient to rotate the inner rotor 16, so that no electric power can be generated. If the rotary driving force of the expander 48 is high enough to generate electric power by the inner rotor 16, the battery demanded electric power calculated by the ECU 150 may be higher than the amount of electric power generated by the rotation of the inner rotor 16 by the expander 48, and in this case, the amount of electric power generated by the inner rotor 16 alone is not enough to meet the battery demanded electric power.

Accordingly, if, in such a situation, the battery demands electric powder and the battery demanded electric power is higher than the amount of electric power generated by the rotation of the inner rotor 16 by the expander 48, the outer rotor 18 of the motor-generator 12 is rotated by the driving force of the engine 2 transmitted through the rotary shaft 25, to generate electric power, or a deficiency of electric power is made up for by the electric power generated by rotating the outer rotor 18 by the driving force of the engine 2.

Specifically, in Step S24, an absolute value of the difference between the battery demanded electric power and the electric power corresponding to the Rankine output is set as a generator output target value, and the outer rotor 18 is operated as a generator while altering the characteristics of the compound current passed through the stator 14 such that the output of the outer rotor 18 functioning as a generator becomes equal to the generator output target value. Consequently, the outer rotor 18 can be properly operated as a generator.

On the other hand, if the decision in Step S20 is "False" ("No"), the control routine proceeds to Step S26, in which an output-side rotor motor command is sent to cause the outer rotor 18, which is the output-side rotor, to operate as a motor.

If the battery demanded electric power calculated by the ECU 150 is lower than the amount of electric power generated by the rotation of the inner rotor 16 by the expander 48, the battery demanded electric power can be met solely by the amount of electric power generated by the inner rotor 16. Surplus electric power by which the amount of electric power generated by the inner rotor 16 exceeds the battery demanded electric power may be used to rotate the outer roller 18.

Thus, when the battery demanded electric power is lower than the electric power corresponding to the Rankine output, for example, when the amount of electric power generated by the rotation of the inner rotor 16 by the expander 48 is higher than or equal to the battery demanded electric power, the rotational energy of the expander 48 is used to assist the rotary driving force of the engine 2.

Specifically, in Step S28, an absolute value of the difference between the battery demanded electric power and the electric power corresponding to the Rankine output is set as a motor output target value, and the outer rotor 18 is operated as a motor while altering the characteristics of the compound current passed through the stator 14 such that the output of the outer rotor 18 functioning as a motor becomes equal to the motor output target value. As a result, the outer rotor 18 can be properly operated as a motor.

As described above, in the waste heat utilization system for an internal combustion engine according to the present invention, the expander 48 of the Rankine circuit 40 and the motor-generator 12 having the inner and outer rotors 16 and 18 are coupled to each other such that the pulley 8 of the engine 2 and the expander 48 are located serially with the motor-generator 12 in between, and the endless belt 9 is passed around the pulley 8 of the engine 8 and the pulley 26, to cause the motor-generator 12 to function as a generator or a motor in accordance with the Rankine output of the Rankine circuit 40.

Thus, it is unnecessary to use a separate alternator, and the motor-generator 12, the expander 48 and the rotary shaft 25 (motor-generator device) can be configured as a compact assembly. Also, the motor-generator 12 can be used as an alternator with a deficiency of the rotary driving force of the expander 48 compensated for by the rotary driving force of the engine 2, and depending on the amount of electric power generated by the rotation of the inner rotor 16, the rotational energy of the expander 48 can be readily used to efficiently assist the rotary driving force of the engine 2 with zero waste. For example, even in a situation where the outside air temperature is high as in the summertime, the electric power demanded by the vehicle can be satisfactorily generated by the motor-generator 12. Also, even in cases where the rotating speed derived from the driving force of the engine 2 is higher than that of the expander 48, the expander 48 is not adversely affected and the pressure of the working fluid on the upstream side of the expander 48 can be kept high, making it possible to assist the driving force of the engine 2 by the rotational energy of the expander 48 through the motor-generator 12.

With the waste heat utilization system of the present invention, both the electric power generation by the motor-generator 12 and the assisting of the driving force of the engine 2 by the rotational energy of the expander 48 can be efficiently accomplished while saving space.

A second embodiment will be now described.

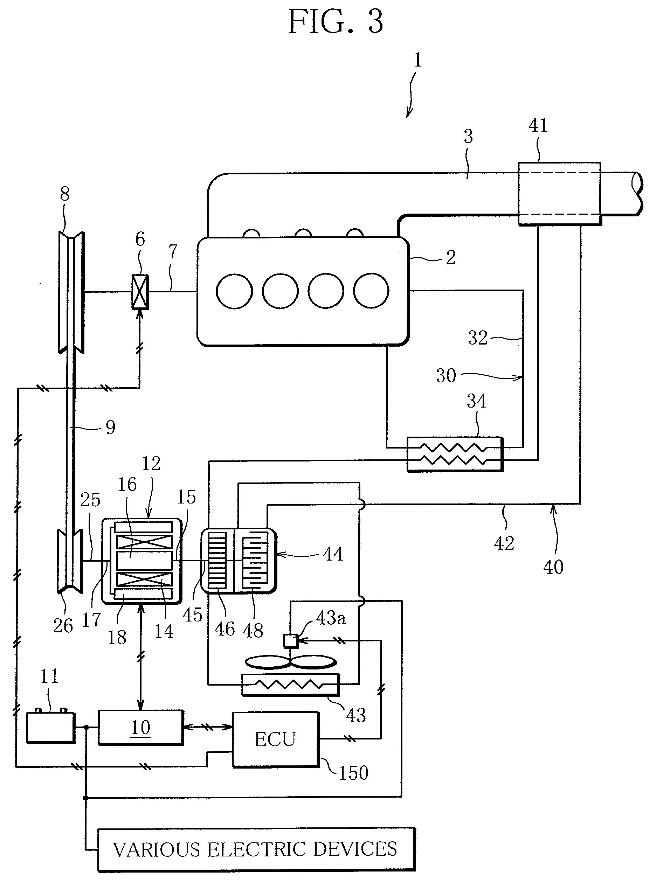

FIG. 3 schematically illustrates a waste heat utilization system for an internal combustion engine according to a second embodiment of the present invention.

The second embodiment differs from the first embodiment in that the pump for circulating the working fluid through the Rankine circuit 40 and the expander are coaxially rotatably coupled to each other. In the following, the differences between the first and second embodiments will be explained.

As illustrated in FIG. 3, a pump 46 of the Rankine circuit 40 is inserted between the cooling water heat exchanger 34 and the Rankine condenser 43, and the pump 46 and the expander 48 are coaxially rotatably coupled to each other and unified into a fluid machine 44.

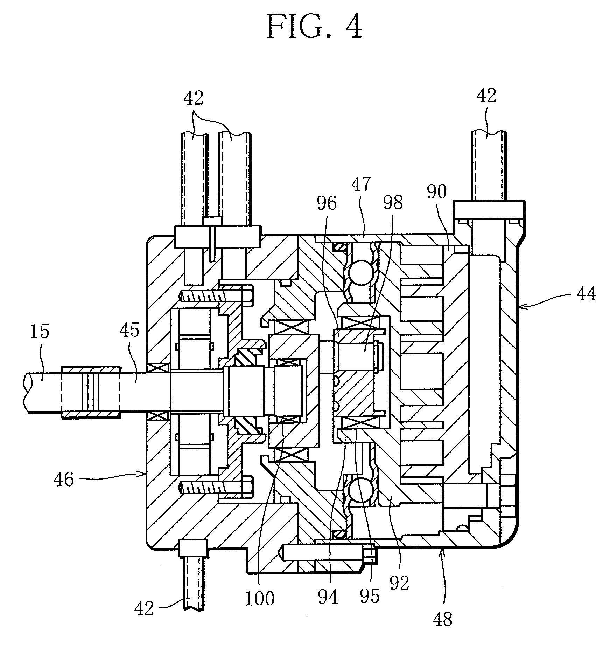

FIG. 4 is a longitudinal sectional view of the fluid machine 44. In the following, the configuration of the fluid machine 44 will be explained in more detail.

The pump 46 is, for example, a variable displacement pump rotated by a rotary shaft 45 to circulate the working fluid through the circulation path 42. The pump 46 is disposed so as to be rotated by the rotary shaft 45.

The expander 48 is a scroll type expander as in the first embodiment, and has a scroll unit accommodated in a housing 47 thereof.

The scroll unit is constituted by a fixed scroll 90 and a movable scroll 92 configured to make orbiting motion relative to the fixed scroll 90.

A boss 94 is formed on a back surface of the movable scroll 92 located opposite the fixed scroll 90, and an eccentric bush 96 is fitted in the boss 94 with a radial bearing 95 therebetween.

A crankpin 98 is inserted through the eccentric bush 96 and is coupled to a scroll unit-side end portion of the rotary shaft 45 at a location offset from the axis thereof, whereby the movable scroll 92 is allowed to make orbiting motion without rotating about its own axis.

The scroll unit-side end portion of the rotary shaft 45 and the crankpin 98 are coupled to each other by a one-way clutch 100 which permits rotation of the movable scroll 92 of the expander 48 to be transmitted to the rotary shaft 45 but does not transmit rotation in the reverse direction. Thus, when the rotating speed of the rotary shaft 45 is higher than the orbiting speed of the movable scroll 92, the rotation of the rotary shaft 45 is not transmitted to the movable scroll 92, that is, the expander 48, and only when the orbiting speed of the movable scroll 92 is higher than the rotating speed of the rotary shaft 45, rotation is transmitted from the movable scroll 92, that is, the expander 48, to the rotary shaft 45.

In the Rankine circuit 40, the working fluid circulates through the circulation path 42 in such a manner that the working fluid leaving the pump 46 flows through the cooling water heat exchanger 34, the exhaust gas heat exchanger 41, the expander 48 and the Rankine condenser 43 and then returns to the pump 46. When the working fluid is expanded in the expander 48, rotary driving force is generated.

Thus, in the waste heat utilization system according to the second embodiment, the pump 46 for circulating the working fluid through the Rankine circuit 40 and the expander 48 are unified into the fluid machine 44.

In the second embodiment, the motor-generator device is constituted by the motor-generator 12, the pump 46, the expander 48, and the rotary shaft 25.

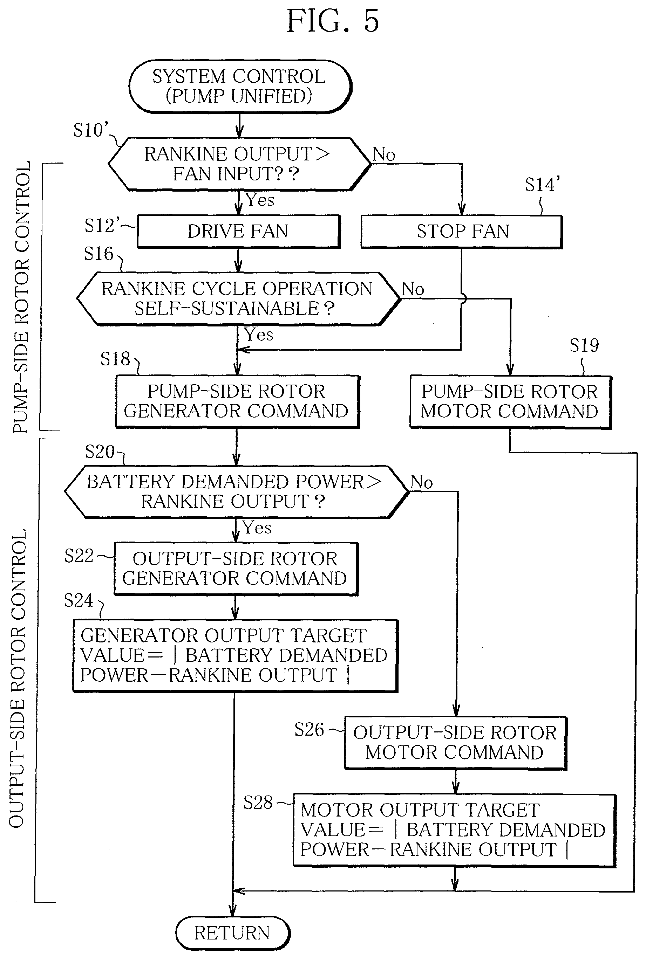

FIG. 5 is a flowchart illustrating a system control routine for the waste heat utilization system according to the second embodiment of the present invention, executed by the ECU 150. Referring to the flowchart, the system control for the waste heat utilization system of the second embodiment, as well as the control of switchover between the generator function and the motor function of the motor-generator 12, will be explained in detail.

In the second embodiment, the pump 46 is unified with the expander 48, and accordingly, the electric fan 43a alone is an electrically driven auxiliary machine of the Rankine circuit 40. In Step S10', therefore, it is determined whether or not the Rankine output is higher than the input to the electric fan 43a. In practice, it is determined whether or not the electric power detected from the motor-generator 12 via the electric power recovery circuit 10 and corresponding to the Rankine output, for example, the amount of electric power generated by the rotation of the inner rotor 16 by the expander 48 with the pump 46 driven, is higher than the input electric power to the electric fan 43a, which is determined on the basis of the information on the vehicle speed, outside air temperature and the like. If the decision is "True" ("Yes"), the control routine proceeds to Step S12' to drive the electric fan 43a, and then to Step S16. On the other hand, if the decision is "False" ("No"), the control routine proceeds to Step S14' to stop the electric fan 43a, and then to Step S18.

That is, when the Rankine output is lower than the input to the electric fan 43a, the input to the electric fan 43a is higher than the Rankine output in the Rankine circuit 40, and since energy loss is being caused, the electric fan 43a is stopped. It is therefore possible to prevent energy loss from being caused in the Rankine circuit 40.

Then, in Step S16, it is determined whether or not the Rankine circuit 40 is capable of self-sustained operation, that is, a pump-side rotor can keep operating with no external input. Specifically, it is determined whether or not the expander 48 is generating rotary driving force and the inner rotor 16, which is the pump-side rotor, is rotating to generate electric power. More specifically, when the inner rotor 16 is functioning as a generator, whether or not the output current derived from the electric power generation by the inner rotor 16 assumes a value greater than or equal to a fixed value is determined to judge if the Rankine circuit 40 is capable of self-sustained operation or not. On the other hand, when the inner rotor 16 is functioning as a motor, whether or not a motor current that the expander 48 contributes by assisting the operation of the inner rotor 16 assumes a value smaller than or equal to a predetermined value (equivalent to the condition that the output current derived from the electric power generation by the inner rotor 16 is greater than or equal to the fixed value) is determined to judge if the Rankine circuit 40 is capable of self-sustained operation or not.

If the decision in Step S16 is "True" ("Yes"), the control routine proceeds to Step S18, in which a pump-side rotor generator command is sent to the electric power recovery circuit 10 to alter the characteristics of the compound current passed through the stator 14 such that the inner rotor 16, which is the pump-side rotor, operates as a generator. Specifically, if the inner rotor 16 is functioning as a motor circuit, the electric power recovery circuit 10 switches the electric circuit to a generator circuit. At this time, the load of the motor-generator 12 is controlled so that the rotary driving force of the expander 48 may be optimized. More specifically, the amount of electric current flow is adjusted.

On the other hand, if the decision in Step S16 is "False" ("No"), the control routine proceeds to Step S19, in which a pump-side rotor motor command is sent to alter the characteristics of the compound current passed through the stator 14 such that the inner rotor 16, which is the pump-side rotor, operates as a motor. In the second embodiment, the pump 46 is unified with the expander 48, and therefore, if the Rankine circuit 40 is incapable of self-sustained operation, the inner rotor 16 of the motor-generator 12 is made to function as a motor so that the pump 46 may be driven by the motor-generator 12.

Thus, at the start of the Rankine circuit 40, the pump 46 can be operated by the motor-generator 12 to circulate the working fluid through the circulation path 42.

In Step S20, it is determined whether or not the battery demanded electric power calculated by the ECU 150 is higher than the electric power corresponding to the aforementioned Rankine output, for example, the amount of electric power generated by the rotation of the inner rotor 16 by the expander 48, as in the first embodiment. If the decision in Step S20 is "True" ("Yes"), the control routine proceeds to Step S22, in which an output-side rotor generator command is sent to alter the characteristics of the compound current passed through the stator 14 so that the outer rotor 18, which is the output-side rotor, may be operated as a generator. On the other hand, if the decision is "False" ("No"), the control routine proceeds to Step S26, in which an output-side rotor motor command is sent to alter the characteristics of the compound current passed through the stator 14 so that the outer rotor 18, which is the output-side rotor, may be operated as a motor.

As described above, with the waste heat utilization system according to the second embodiment of the present invention in which the pump 46 is provided in the Rankine circuit 40, both the electric power generation by the motor-generator 12 and the assisting of the driving force of the engine 2 by the rotational energy of the expander 48 can be efficiently accomplished while saving space, as in the first embodiment.

In the motor-generator 12, the inner rotor 16 can be made to perform the motor function via the stator 14 by using part of the electric power generated by the outer rotor 18. Thus, in the second embodiment, the pump 46 of the fluid machine 44 can be forcedly driven by the rotary driving force generated by the inner rotor 16. The working fluid can therefore be circulated through the circulation path 42, and the expander 48 can be appropriately supplied with the working fluid to start the Rankine circuit 40. For example, when the Rankine circuit 40 is to be started, the inner rotor 16 can be operated as a motor to drive the pump 46, whereby the Rankine circuit 40 can be started with the working fluid appropriately supplied to the expander 48.

When the pump 46 is forcedly operated, the expander 48 does not constitute an unnecessary load on the motor-generator 12 because the one-way clutch 100 is inserted between the rotary shaft 45 and the crankpin 98 of the expander 48.

A third embodiment will be now described.

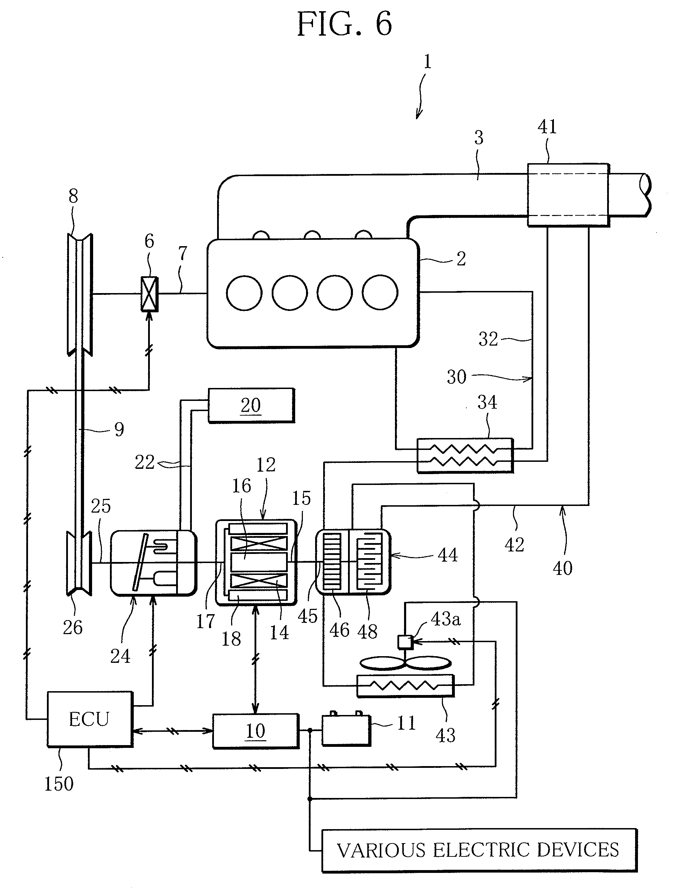

FIG. 6 schematically illustrates a waste heat utilization system for an internal combustion engine according to the third embodiment of the present invention.

The third embodiment differs from the second embodiment in that an air conditioning circuit (refrigeration circuit) 20 is additionally provided and that a compression machine (compressor) 24 of the air conditioning circuit 20 is coupled to the motor-generator 12. In the following, the differences between the second and third embodiments will be explained.

As illustrated in the figure, the compressor 24 of the air conditioning circuit 20, the motor-generator 12, and the fluid machine 44, which is a unified combination of the pump 46 and the expander 48 of the Rankine circuit 40, are configured such that the rotary shaft 15 of the motor-generator 12 is coaxially rotatably coupled to the rotary shaft 45 of the fluid machine 44 and that the rotary shaft 17 of the motor-generator 12 is coaxially rotatably coupled to a rotary shaft 25 of the compressor 24. The endless belt 9 is passed around the pulley 26 of the rotary shaft 25 and the pulley 8 of the crankshaft 7 of the engine 2.

The air conditioning circuit 20 includes a circulation path 22 for circulating a refrigerant. The compression machine (compressor) 24, an air conditioning condenser, not shown, a gas-liquid separator, not shown, an expansion valve, not shown, an evaporator, not shown, and the like are inserted in the circulation path 22 in the mentioned order as viewed in the flowing direction of the refrigerant, to constitute a closed circuit. Air in the vehicle compartment is passed through the evaporator to allow heat to be transferred between the air and the refrigerant, for example, so that the interior of the vehicle compartment is air-conditioned.

The compressor 24 is driven mainly by the rotary driving force of the engine 2 transmitted to the rotary shaft 25 through the endless belt 9 and the pulley 26, to compress the refrigerant, which has been evaporated in the evaporator, into a superheated vapor state. The refrigerant discharged from the compressor 24 is condensed into a liquid state by the air conditioning condenser, and the liquid refrigerant is delivered to the gas-liquid separator. Subsequently, the refrigerant is expanded at the expansion valve and delivered to the evaporator.

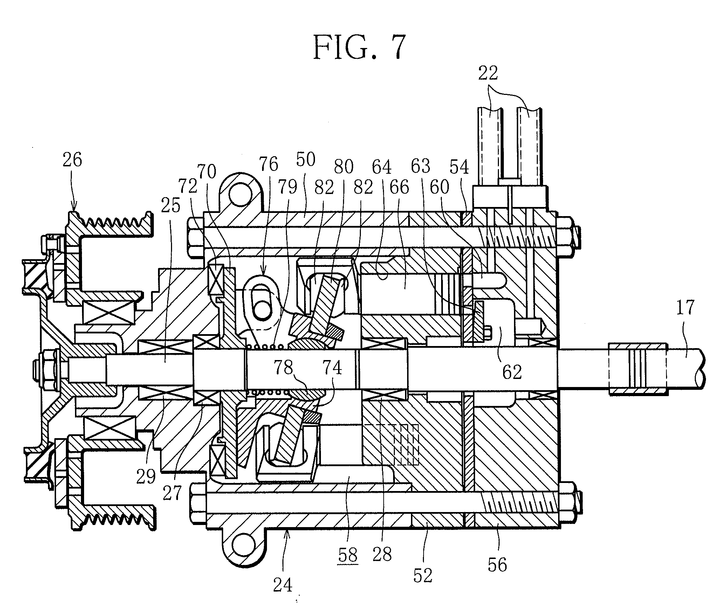

FIG. 7 is a longitudinal sectional view of the compressor 24. In the following, the configuration of the compressor 24 will be explained in more detail.

As illustrated in the figure, the rotary shaft 25 penetrates through the compressor 24, and the pulley 26 is attached to one end of the rotary shaft 25.

The compressor 24 is a variable capacity type swash plate compressor, and a cylinder block 52, a valve plate 54 and a cylinder head 56 are fastened to one end of a housing 50 in the mentioned order in a gastight manner. A crank chamber 58 is defined between the housing 50 and the cylinder block 52.

The cylinder head 56 has a suction port and a discharge port formed therein, and a suction chamber 60 and a discharge chamber 62 communicating with the suction and discharge ports, respectively, are formed within the cylinder head 56.

The suction chamber 60 can communicate with each cylinder bore 64 in the cylinder block 52 through a corresponding suction reed valve (not shown), and the discharge chamber 62 can communicate with each cylinder bore 64 through a corresponding discharge reed valve 63. Although not illustrated, the discharge chamber 62 communicates with the crank chamber 58 through a communication passage, and a solenoid valve is inserted in the communication passage. The solenoid valve is electrically connected to the ECU 150 and opens and closes under the control of the ECU 150, to intermittently connect the discharge chamber 62 and the crank chamber 58 with each other.

A piston 66 is inserted into each cylinder bore 64 of the cylinder block 52 from the crank chamber side for reciprocating motion in the corresponding cylinder bore 64. Each piston 66 has a tail projecting into the crank chamber 58.

On the other hand, the rotary shaft 25 extends through the crank chamber 58, the cylinder block 52, the valve plate 54 and the cylinder head 56, and are rotatably supported by the housing 50 and the cylinder block 52 with two radial bearings 27 and 28 therebetween, respectively. A lip seal 29 is fitted around the rotary shaft 25 and located closer to the pulley 26 than the radial bearing 27 is.

A conversion mechanism is provided between the rotary shaft 25 and the respective tails of the pistons 66 for converting rotary motion of the drive shaft 25 to reciprocating motion of the pistons 66.

The conversion mechanism includes a disc-shaped rotor 70 fixed on the rotary shaft 25, and a thrust bearing 72 is arranged between the rotor 70 and the housing 50.

A cylindrical swash plate boss 74 is fitted around a portion of the rotary shaft 25 located between the rotor 70 and the cylinder block 52, and is coupled to the rotor 70 by a hinge 76. Specifically, the swash plate boss 74 has a spherically concaved inner peripheral surface and is disposed in sliding contact with a spherical outer peripheral surface of a sleeve 78 slidably fitted around the rotary shaft 25. That is, the swash plate boss 74 is tiltable with respect to the rotary shaft 25 and at the same time is rotatable together with the rotary shaft 25. A compression coil spring 79 is disposed around the rotary shaft 25 and between the sleeve 78 and the rotor 70.

An annular swash plate 80 is securely fitted around the swash plate boss 74 so as to be rotatable together with the swash plate boss 74. The swash plate 80 has an outer peripheral portion located in recesses formed in the respective tails of the pistons 66. The recess of each tail has a pair of spherical seats spaced from each other in the axial direction of the piston 66, and a pair of semispherical shoes 82 are received in the respective spherical seats and disposed in sliding contact with the outer peripheral portion of the swash plate 80 so as to hold the swash plate 80 from both sides thereof in the thickness direction of the swash plate 80.

Consequently, in the compressor 24, as the rotary shaft 25 rotates, the rotary motion is converted to reciprocating motion of the pistons 66 through the conversion mechanism, namely, the rotor 70, the hinge 76, the swash plate boss 74, the swash plate 80, and the shoes 82. As each piston 66 reciprocates, the refrigerant in the suction chamber 60 is drawn in and then compressed in the corresponding cylinder bore 64, and the compressed refrigerant is discharged to the circulation path 22 through the discharge reed valve 63 and the discharge chamber 62.

The amount of the refrigerant discharged from the compressor 24 at this time varies depending on the pressure (back pressure) in the crank chamber 58, which pressure increases and decrease as the aforementioned solenoid valve is opened and closed by the ECU 150. Specifically, the swash plate 80 tilts in response to change of equilibrium among compression reaction force acting upon the pistons 66, the back pressure and the urging force of the compression coil spring 79 applied to the swash plate 80, to increase or decrease the stroke length of the individual pistons 66, so that the discharge capacity (compression capacity) for the refrigerant increases or decreases (compression capacity control unit).

Thus, when the demand for operation of the air conditioning circuit 20 is low or zero as in the case where the air conditioning circuit 20 need not be operated or the output of the air conditioning circuit 20 needs to be kept low, the operation of the compressor 24 can be restricted by raising the back pressure through adjustment of the opening of the solenoid valve to decrease the degree of tilting of the swash plate 80 and thereby lowering the discharge capacity for the refrigerant.

As described above, in the waste heat utilization system according to the third embodiment of the present invention, the compressor 24 of the air conditioning circuit 20, the motor-generator 12 having the inner and outer rotors 16 and 18, and the fluid machine 44, which is a unified combination of the pump 46 and the expander 48 of the Rankine circuit 40, are configured such that the rotary shaft 15 of the motor-generator 12 is coaxially rotatably coupled to the rotary shaft 45 of the fluid machine 44, and that the rotary shaft 17 of the motor-generator 12 is coaxially rotatably coupled to the rotary shaft 25 of the compressor 24.

As for the system control, the system control routine for the waste heat utilization system illustrated in the flowchart of FIG. 5 can be directly applied to the third embodiment.

Accordingly, with the waste heat utilization system according to the third embodiment of the present invention, it is unnecessary to use a separate alternator even though the compressor 24 of the air conditioning circuit 20 is provided, and the compressor 24, the motor-generator 12 and the fluid machine 44 can be configured as a compact assembly, thus saving space. Also, the motor-generator 12 can be used as an alternator with a deficiency of the rotary driving force of the expander 48 compensated for by the rotary driving force of the engine 2, and depending on the amount of electric power generated by the rotation of the inner rotor 16, the rotational energy of the expander 48 can be readily used to efficiently assist the rotary driving force of the engine 2 with zero waste. Thus, both the electric power generation by the motor-generator 12 and the assisting of the driving force of the engine 2 by the rotational energy of the expander 48 can be efficiently accomplished.

For the compressor 24, a variable capacity type swash plate compressor is used, and therefore, when the demand for operation of the air conditioning circuit 20 is low or zero, the compressor 24 can be made not to impose an unnecessary load. Accordingly, the rotary driving force of the engine 2 can be satisfactorily assisted by the rotational energy of the expander 48.

Specifically, the compressor 24 is a variable capacity type swash plate compressor and the discharge capacity thereof is variably controlled in accordance with operating conditions of the air conditioning circuit 20. Thus, when the demand for operation of the air conditioning circuit 20 is low or zero, the discharge capacity of the compressor 24 may be reduced or set to zero to restrict the operation of the compressor 24 so that the compressor 24 may not constitute an unnecessary load. As a result, the rotary driving force of the engine 2 can be satisfactorily assisted by the rotational energy of the expander 48.

In the above embodiment, the compressor 24 of the air conditioning circuit 20 is used with the fluid machine 44 including the expander 48 unified with the pump 46, as in the second embodiment, but may alternatively be used with the fluid machine not provided with the pump 46 and including the expander 48 only, as in the first embodiment.

Also, when idling of the engine 2 is stopped, for example, the engagement-disengagement clutch 6 is disengaged to cut off the transmission of the rotary driving force from the motor-generator 12 to the engine 2 through the compressor 24.

By disengaging the engagement-disengagement clutch 6 at the time of idling-stop, it is possible to operate the compressor 24 by driving the motor-generator 12 by the electric power stored in the battery 11 even while the engine 2 is temporarily stopped because of idling stop, so that the air conditioning circuit 20 can be suitably operated.

In this embodiment, the compressor 24 is coupled in series with the motor-generator 12, but the compressor 24 may alternatively be coupled in parallel with the pulley 26 or be driven by the belt 9 in contact therewith in the configurations of FIGS. 1 and 3, for example. Also in this case, by disengaging the engagement-disengagement clutch 6 at the time of idling-stop, for example, it is possible to operate the compressor 24 by driving the motor-generator 12 by the electric power stored in the battery 11, whereby the air conditioning circuit 20 can be suitably operated.

A fourth embodiment will be now described.

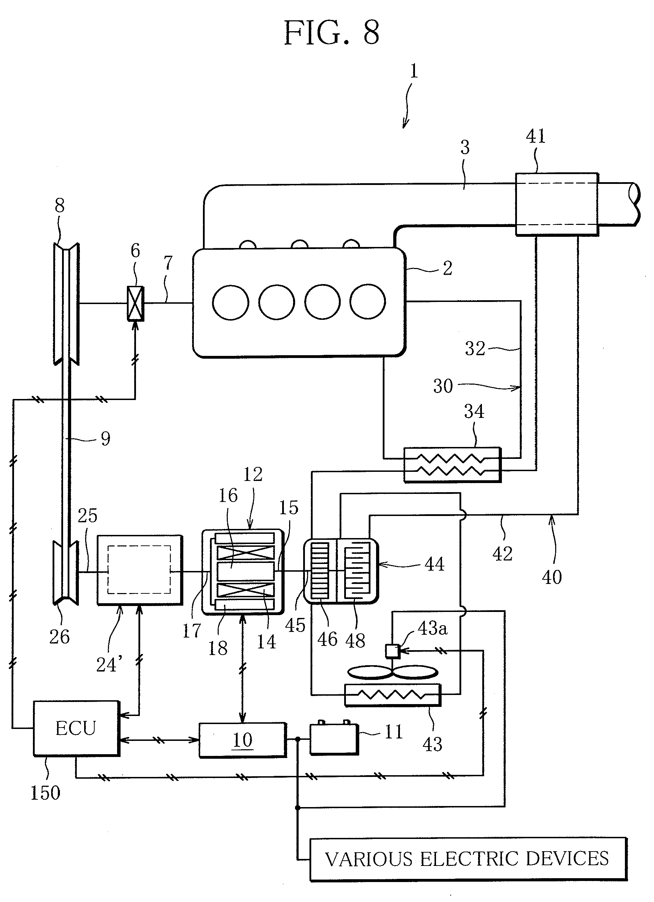

FIG. 8 schematically illustrates a waste heat utilization system for an internal combustion engine according to the fourth embodiment of the present invention.

The fourth embodiment differs from the third embodiment in that, instead of the compressor 24 of the air conditioning circuit 20, an auxiliary machine 24' driven by the engine 2 is coupled to the motor-generator 12. For the system control, the system control routine for the waste heat utilization system illustrated in the flowchart of FIG. 5 is directly applied to the fourth embodiment, as in the third embodiment.

The auxiliary machine 24' driven by the engine 2 is, for example, an oil pump used for power steering but may be some other suitable auxiliary machine.

Also in the case where the auxiliary machine 24' driven by the engine 2, in place of the compressor 24 of the air conditioning circuit 20, is coupled to the motor-generator 12, it is possible to accomplish both the electric power generation by the motor-generator 12 and the assisting of the driving force of the engine 2 by the rotational energy of the expander 48 while at the same time saving space, as in the foregoing embodiments.

While the embodiments of the present invention have been described above, the present invention is not limited to the foregoing embodiments and may be modified in various ways without departing from the scope of the appended claims.

For example, in the above embodiments, the inner rotor 16 of the motor-generator 12 is coupled through the rotary shaft 15 to the expander 48 or the fluid machine 44, and the outer rotor 18 is coupled through the rotary shaft 17 to the pulley 26 or the compressor 24 or the auxiliary machine 24'. Conversely, the inner rotor 16 may be coupled to the pulley 26 or the compressor 24 or the auxiliary machine 24', and the outer rotor 18 may be coupled to the expander 48 or the fluid machine 44.

Also, a variable capacity type swash plate compressor is used as the compressor 24 of the above embodiment. The compressor 24 to be used is not limited to swash plate compressor and some other variable capacity type compressor may be used instead.

In the foregoing embodiments, the endless belt 9 is passed around the pulley 8 of the engine 2 and the pulley 26 of the rotary shaft 25 to couple the engine 2 and the rotary shaft 25 to each other. Where a cooling fan, a supercharger, a water pump and the like are provided as additional auxiliary machines of the engine 2, for example, the endless belt 9 may be passed around pulleys of these auxiliary machines as well. Also, the engine 2, the rotary shaft 25 and the auxiliary machines may be coupled by gears or the like, instead of the belt 9.

Further, in the above embodiments, the Rankine circuit 40 is configured to recover waste heat of the engine 2 with the use of the cooling water heat exchanger 34 which receives heat from the cooling water circulating through the cooling water circuit 30, and the exhaust gas heat exchanger 41 which receives heat from the exhaust gas flowing through the exhaust pipe 3 of the engine 2. Waste heat of the engine 2 may be recovered using either one of the two heat exchangers.

### Explanation of Reference Signs

- 1: waste heat utilization system
- 2: engine
- 8, 26: pulley
- 9: belt
- 10: electric power recovery circuit
- 12: motor-generator
- 14: stator
- 15, 17: rotary shaft
- 16: inner rotor (one rotor)
- 18: outer rotor (other rotor)
- 20: air conditioning circuit (refrigeration cycle)
- 24: compressor
- 24': auxiliary machine
- 25: rotary shaft
- 30: cooling water circuit
- 40: Rankine circuit (Rankine cycle)
- 43: Rankine condenser (condenser)
- 43a: electric fan
- 44: fluid machine
- 46: pump
- 45: rotary shaft
- 48: expander
- 49: electric pump
- 150: ECU

## Claims

1. A waste heat utilisation system for an internal combustion engine, comprising:
a Rankine cycle (40) including a circulation path for a working fluid, in which are sequentially inserted an evaporator (34, 41) configured to heat and evaporate the working fluid by waste heat of the internal combustion engine (2), an expander (48) configured to expand the working fluid supplied from the evaporator, to generate rotary driving force, a condenser (43) configured to condense the working fluid supplied from the expander, and a pump (46, 49) configured to deliver, to the evaporator, the working fluid supplied from the condenser; and
a motor-generator (12) including an inner rotor (16) and an outer rotor (18) located inside and outside, respectively, of a stator (14) thereof, wherein
at least the motor-generator and the expander are coupled to each other with either one (16) of the inner and outer rotors of the motor-generator coupled to a rotary shaft (45) of the expander, and the other (18) of the inner and outer rotors is coupled to a rotary shaft (7) of the internal combustion engine,
the motor-generator being capable of causing each of the inner and outer rotors to function as both a generator and a motor as needed.

2. The waste heat utilization system according to claim 1, wherein the other (18) of the inner and outer rotors is coupled to the rotary (7) shaft of the internal combustion engine with an auxiliary machine (24, 24') connected in series or parallel with the other of the inner and outer rotors.

3. The waste heat utilization system according to claim 2, further comprising a refrigeration cycle (20) including a circulation path for a refrigerant, in which is inserted a compressor (24) configured to compress the refrigerant by using at least rotary driving force of the internal combustion engine,
wherein the auxiliary machine is the compressor.

4. The waste heat utilization system according to claim 3, wherein:
the compressor (24) is a variable capacity type compressor, and
the waste heat utilization system further comprises a compression capacity control unit (80, 150) configured to variably control a compression capacity of the variable capacity type compressor in accordance with operating conditions of the refrigeration cycle (20).

5. The waste heat utilization system according to claim 3 or 4, wherein an engagement-disengagement clutch (6) is arranged between the internal combustion engine (2) and the compressor (24) and configured to establish and cut off transmission of rotary driving force from the motor-generator to the internal combustion engine through the compressor in accordance with an operating state of the internal combustion engine.

6. The waste heat utilization system according to any one of claims 1 to 5, wherein:
the expander (48) and the pump (46) are coaxially coupled together into a unified body, and
the motor-generator (12) and the unified body of the expander and the pump are coupled to each other with the one (16) of the inner and outer rotors coupled to a rotary shaft (45) of the unified body of the expander and the pump, and the other (18) of the inner and outer rotors is coupled to the rotary shaft (7) of the internal combustion engine.

7. The waste heat utilization system according to any one of claims 1 to 5, further comprising:
an electric power recovery unit (10, 11) including a battery configured to store electric power generated by the motor-generator (12) as a result of rotation of the expander (48) or the internal combustion engine (2); and
a system control unit (150) configured to control a degree of recovery of electric power by the electric power recovery unit.

8. The waste heat utilization system according to claim 7, wherein:
the electric power recovery unit (10, 11) includes a Rankine output detection unit configured to detect a Rankine output generated by the Rankine cycle (40), a battery charge amount detection unit configured to detect the charge amount of the battery, and a motor-generator output variable unit configured to switch a function of each of the inner and outer rotors of the motor-generator between a motor function and a generator function,
the system control unit (150) includes a battery demanded electric power calculation unit configured to calculate battery demanded electric power demanded by the electric power recovery unit, based on the charge amount of the battery detected by the battery charge amount detection unit, and a motor-generator controls unit configured to control the motor-generator output variable unit in accordance with the battery demanded electric power calculated by the battery demanded electric power calculation unit, and
the system control unit controls the motor-generator control unit in such a manner that the function of the other (18) of the inner and outer rotors is switched to the generator function by the motor-generator output variable unit when the battery demanded electric power calculated by the battery demanded electric power calculation unit is higher than electric power corresponding to the Rankine output detected by the Rankine output detection unit, and is switched to the motor function by the motor-generator output variable unit when the battery demanded electric power is lower than the electric power corresponding to the Rankine output.

9. The waste heat utilization system according to claim 8, wherein:
the motor-generator control unit (150) controls the motor-generator in accordance with a generator output target value when the function of the other (18) of the inner and outer rotors is switched to the generator function, and controls the motor-generator output variable unit in accordance with a motor output target value when the function of the other (18) of the inner and outer rotors is switched to the motor function, and
the generator output target value and the motor output target value are each set based on an absolute value of a difference between the battery demanded electric power and the electric power corresponding to the Rankine output.

10. The waste heat utilization system according to claim 8 or 9, wherein:
the Rankine cycle includes an electrically driven auxiliary machine (43a, 49),
the system control unit (150) further includes a Rankine cycle electric auxiliary input control unit configured to control input electric power to the electrically driven auxiliary machine of the Rankine cycle, and
the system control unit (150) causes the Rankine cycle electric auxiliary input control unit to stop operation of the electrically driven auxiliary machine of the Rankine cycle when the electric power corresponding to the Rankine output detected by the Rankine output detection unit is lower at least than the input electric power to the electrically driven auxiliary machine of the Rankine cycle, and causes the Rankine cycle electric auxiliary input control unit to operate the electrically driven auxiliary machine of the Rankine cycle when the electric power corresponding to the Rankine output is higher at least than the input electric power to the electrically driven auxiliary machine of the Rankine cycle.

11. The waste heat utilization system according to any one of claims 8 to 10, wherein:
the expander (48) and the pump (46) are coaxially coupled together into a unified body, and
the motor-generator (12) and the unified body of the expander and the pump are coupled to each other with the one (16) of the inner and outer rotors coupled to a rotary shaft (45) coaxially provided in the unified body of the expander and the pump, and the other (18) of the inner and outer rotors is coupled to the rotary shaft (7) of the internal combustion engine.

12. The waste heat utilization system according to claim 11, wherein:
the motor-generator control unit (150) controls the motor-generator output variable unit so as to switch the function of the one (16) of the inner and outer rotors to the motor function or the generator function, and
the system control unit (150) controls the motor-generator control unit in such a manner that the function of the one (16) of the inner and outer rotors is switched to the generator function by the motor-generator output variable unit when the Rankine output detected by the Rankine output detection unit is higher than or equal to a fixed value, and is switched to the motor function by the motor-generator output variable unit when the Rankine output is lower than the fixed value.

13. A motor-generator device for use in the waste heat utilization system according to any one of claims 1 to 12, comprising:
the motor-generator (12), the expander (48); and
an input-output shaft (25) coupled to a rotary shaft of the internal combustion) engine,
wherein either one (16) of the inner and outer rotors of the motor-generator is coupled to the rotary shaft (45) of the expander, and the other (18) of the inner and outer rotors is coupled to the input-output shaft,
the motor-generator being capable of causing each of the inner and outer rotors to function as both a generator and a motor as needed.

14. The motor-generator device according to claim 13, wherein:
the pump (45) of the Rankine cycle (40) is arranged between the motor-generator (12) and the expander (48), and
the pump has a drive shaft of which one end is coupled to the expander and of which the other end is coupled to the one (16) of the inner and outer rotors.

15. The motor-generator device according to claim 14, wherein a one-way clutch (100) is interposed between the pump (46) and the expander (48) and configured not to transmit rotary driving force from the pump to the expander but to transmit rotary driving force from the expander to the pump.

## Patentansprüche

1. Abwärmenutzungssystem für einen Verbrennungsmotor, mit:
einem Rankine-Zyklus (40) mit einem Zirkulationspfad für ein Arbeitsfluid, in den sequentiell eingesetzt sind: ein Verdampfer (34, 41), der dafür konfiguriert ist, das Arbeitsfluid durch Abwärme des Verbrennungsmotors (2) zu erwärmen und zu verdampfen, ein Expander (48), der dafür konfiguriert ist, das vom Verdampfer zugeführte Arbeitsfluid zu expandieren, um eine Drehantriebskraft zu erzeugen, ein Kondensator (43), der dafür konfiguriert ist, das vom Expander zugeführte Arbeitsfluid zu kondensieren, und eine Pumpe (46, 49), die dafür konfiguriert ist, dem Expander das vom Kondensator zugeführte Arbeitsfluid zuzuführen; und
einem Motorgenerator (12) mit einem Innenrotor (16) und einem Außenrotor (18), die innerhalb bzw. außerhalb eines Stators (14) davon angeordnet sind,
wobei mindestens der Motorgenerator und der Expander miteinander verbunden sind, indem eine Komponente (16) unter dem Innen- und dem Außenrotor des Motorgenerators mit einer Drehwelle (45) des Expanders verbunden ist und die andere Komponente (18) unter dem Innen- und dem Außenrotor mit einer Drehwelle (7) des Verbrennungsmotors verbunden ist,
wobei der Motorgenerator dazu geeignet ist, zu veranlassen, dass der Innen- und der Außenrotor nach Bedarf jeweils sowohl als ein Generator als auch als ein Motor funktionieren.

2. Abwärmenutzungssystem nach Anspruch 1, wobei die andere Komponente (18) unter dem Innen- und dem Außenrotor mit der Drehwelle (7) des Verbrennungsmotors verbunden ist, wobei eine Hilfsmaschine (24, 24') mit der anderen Komponente unter dem Innen- und dem Außenrotor in Serie oder parallel geschaltet ist.

3. Abwärmenutzungssystem nach Anspruch 2, ferner mit einem Kühlzyklus (20), der einen Zirkulationspfad für ein Kältemittel aufweist, in den ein Kompressor (24) eingefügt ist, der dafür konfiguriert ist, das Kältemittel unter Verwendung mindestens einer Drehantriebskraft des Verbrennungsmotors zu verdichten.

4. Abwärmenutzungssystem nach Anspruch 3, wobei:
der Kompressor (24) ein Kompressor mit regelbarer Kapazität ist, und
wobei das Abwärmenutzungssystem ferner eine Verdichtungskapazitätregeleinheit (80, 150) aufweist, die dafür konfiguriert ist, eine Verdichtungskapazität des Kompressors mit regelbarer Kapazität gemäß Betriebsbedingungen des Kühlzyklus (20) variabel zu regeln.

5. Abwärmenutzungssystem nach Anspruch 3 oder 4, wobei eine ein- /ausrückbare Kupplung (6) zwischen dem Verbrennungsmotor (2) und dem Kompressor (24) angeordnet und dafür konfiguriert ist, eine Drehantriebskraft vom Motorgenerator zum Verbrennungsmotor über den Kompressor gemäß einem Betriebszustand des Verbrennungsmotors zu übertragen oder die Übertragung der Drehantriebskraft zu unterbrechen.

6. Abwärmenutzungssystem nach einem der Ansprüche 1 bis 5, wobei:
der Expander (48) und die Pumpe (46) koaxial miteinander verbunden sind, um einen integralen Körper zu bilden, und
der Motorgenerator (12) und der integrale Körper aus dem Expander und der Pumpe miteinander verbunden sind, indem die eine Komponente (16) unter dem Innen- und dem Außenrotor mit einer Drehwelle (45) des integralen Körpers aus dem Expander und der Pumpe verbunden ist und die andere Komponente (18) unter dem Innen- und dem Außenrotor mit der Drehwelle (7) des Verbrennungsmotors verbunden ist.

7. Abwärmenutzungssystem nach einem der Ansprüche 1 bis 5, ferner mit:
einer Einheit (10, 11) zum Zurückgewinnen elektrischer Energie mit einer Batterie, die dafür konfiguriert ist, elektrische Energie zu speichern, die durch den Motorgenerator (12) als Ergebnis einer Drehbewegung des Expanders (48) oder des Verbrennungsmotors (2) erzeugt wird; und
einer Systemsteuereinheit (150), die dafür konfiguriert ist, einen Rückgewinnungsgrad der durch die Einheit zum Zurückgewinnen elektrischer Energie zurückgewonnenen elektrischen Energie zu steuern.

8. Abwärmenutzungssystem nach Anspruch 7, wobei:
die Einheit (10, 11) zum Zurückgewinnen elektrischer Energie eine Rankine-Ausgangsleistungserfassungseinheit, die dafür konfiguriert ist, eine durch den Rankine-Zyklus (40) erzeugte Rankine-Ausgangsleistung zu erfassen, eine Batterielademengenerfassungseinheit, die dafür konfiguriert ist, die Lademenge der Batterie zu erfassen, und eine Motorgeneratorschalteinheit aufweist, die dafür konfiguriert ist, eine Funktion des Innen- und des Außenrotors des Motorgenerators zwischen einer Motorfunktion und einer Generatorfunktion zu schalten,
die Systemsteuereinheit (150) eine Einheit zum Berechnen einer angeforderten elektrischen Batterieleistung, die dafür konfiguriert ist, die durch die Einheit zum Zurückgewinnen elektrischer Energie angeforderte elektrische Batterieleistung basierend auf der durch die Lademengenerfassungseinheit berechneten Batterielademenge zu berechnen, und eine Motorgeneratorsteuereinheit aufweist, die dafür konfiguriert ist, die Motorgeneratorschalteinheit gemäß der durch die Einheit zum Berechnen der angeforderten elektrischen Batterieleistung berechnete angeforderte elektrische Batterieleistung zu steuern, und
die Systemsteuereinheit die Motorgeneratorsteuereinheit derart steuert, dass die Funktion der anderen Komponente (18) unter dem Innenund dem Außenrotor durch die Motorgeneratorschalteinheit auf die Generatorfunktion geschaltet wird, wenn die durch die Einheit zum Berechnen einer angeforderten elektrische Batterieleistung berechnete angeforderte elektrische Batterieleistung höher ist als die elektrische Leistung, die der durch die Rankine-Ausgangsleistungserfassungseinheit erfassten Rankine-Ausgangsleistung entspricht, und durch die Motorgeneratorschalteinheit auf die Motorfunktion geschaltet wird, wenn die angeforderte elektrische Batterieleistung niedriger ist als die der Rankine-Ausgangsleistung entsprechende elektrische Leistung.

9. Abwärmenutzungssystem nach Anspruch 7, wobei:
die Motorgeneratorsteuereinheit (150) den Motorgenerator gemäß einem Generatorausgangsleistungs-Sollwert steuert, wenn die Funktion der anderen Komponente (18) unter dem Innen- und dem Außenrotor auf die Generatorfunktion geschaltet ist, und die Motorgeneratorschalteinheit gemäß einem Motorausgangsleistungs-Sollwert steuert, wenn die Funktion der anderen Komponente (18) unter dem Innen- und dem Außenrotor auf die Motorfunktion geschaltet ist, und
der Generatorausgangsleistungs-Sollwert und der Motorausgangsleistungs-Sollwert jeweils basierend auf einem Absolutwert einer Differenz zwischen der angeforderten elektrischen Batterieleistung und der der Rankine-Ausgangsleistung entsprechenden elektrischen Leistung gesetzt werden.

10. Abwärmenutzungssystem nach Anspruch 8 oder 9, wobei:
der Rankine-Zyklus eine elektrisch angetriebene Hilfsmaschine (43a, 49) aufweist,
die Systemsteuereinheit (150) ferner eine Einheit zum Steuern einer der elektrisch angetriebenen Hilfsmaschine des Rankine-Zyklus zugeführten elektrischen Leistung aufweist, und
die Systemsteuereinheit (150) veranlasst, dass die Einheit zum Steuern einer der elektrisch angetriebenen Hilfsmaschine des RankineZyklus zugeführten elektrischen Leistung den Betrieb der elektrisch angetriebenen Hilfsmaschine des Rankine-Zyklus stoppt, wenn die elektrische Leistung, die der durch die Rankine-Ausgangsleistungserfassungseinheit erfassten Rankine-Ausgangsleistung entspricht, mindestens niedriger ist als die der elektrisch angetriebenen Hilfsmaschine des Rankine-Zyklus zugeführte elektrische Leistung, und veranlasst, dass die Einheit zum Steuern einer der elektrisch angetriebenen Hilfsmaschine des Rankine-Zyklus zugeführten elektrischen Leistung die elektrisch angetriebene Hilfsmaschine des Rankine-Zyklus betreibt, wenn die der Rankine-Ausgangsleistung entsprechende elektrische Leistung mindestens höher ist als die der elektrisch angetriebenen Hilfsmaschine des Rankine-Zyklus zugeführte elektrische Leistung.

11. Abwärmenutzungssystem nach einem der Ansprüche 8 bis 10, wobei:
der Expander (48) und die Pumpe (46) koaxial verbunden sind, um einen integralen Körper zu bilden, und
der Motorgenerator (12) und der integrale Körper aus dem Expander und der Pumpe miteinander verbunden sind, wobei die eine Komponente (16) unter dem Innen- und dem Außenrotor mit einer im integralen Körper aus dem Expander und der Pumpe koaxial angeordneten Drehwelle (45) verbunden ist, und die andere Komponente (18) unter dem Innen- und dem Außenrotor mit der Drehwelle (7) des Verbrennungsmotors verbunden ist.

12. Abwärmenutzungssystem nach Anspruch 1, wobei:
die Motorgeneratorsteuereinheit (150) die Motorgeneratorschalteinheit derart steuert, dass die Funktion der einen Komponente (16) unter dem Innen- und dem Außenrotors auf die Motorfunktion oder die Generatorfunktion geschaltet wird, und
die Systemsteuereinheit (150) die Motorgeneratorsteuereinheit derart steuert, dass die Funktion der einen Komponente (16) unter dem Innen- und dem Außenrotor durch die Motorgeneratorschalteinheit auf die Generatorfunktion geschaltet wird, wenn die durch die Rankine-Ausgangsleistungserfassungseinheit erfasste Rankine-Ausgangsleistung größer oder gleich einem festen Wert ist, und durch die Motorgeneratorschalteinheit auf die Motorfunktion geschaltet wird, wenn die Rankine-Ausgangsleistung kleiner ist als der feste Wert.

13. Motorgeneratorvorrichtung zur Verwendung im Abwärmenutzungssystem nach einem der Ansprüche 1 bis 12, mit:
dem Motorgenerator (12);
dem Expander (48); und
einer mit einer Drehwelle des Verbrennungsmotors verbundenen Eingangs-Ausgangswelle (25),
wobei eine Komponente (16) unter dem Innen- und dem Außenrotor des Motorgenerators mit der Drehwelle (45) des Expanders verbunden ist und die andere Komponente (18) unter dem Innen- und dem Außenrotor mit der Eingangs-Ausgangswelle verbunden ist, und
der Motorgenerator dazu geeignet ist, zu veranlassen, dass der Innen- und der Außenrotor nach Bedarf jeweils sowohl als Generator als auch als Motor funktionieren.

14. Motorgeneratorvorrichtung nach Anspruch 13, wobei:
die Pumpe (46) des Rankine-Zyklus (40) zwischen dem Motorgenerator (12) und dem Expander (48) angeordnet ist, und
die Pumpe eine Antriebswelle aufweist, wobei ein Ende davon mit dem Expander verbunden ist und ihr anderes Ende mit der einen Komponente (16) unter dem Innen- und dem Außenrotor verbunden ist.

15. Motorgeneratorvorrichtung nach Anspruch 14, wobei eine Einwegekupplung (100) zwischen der Pumpe (46) und dem Expander (48) angeordnet und dafür konfiguriert ist, keine Drehantriebskraft von der Pumpe zum Expander zu übertragen, aber eine Drehantriebskraft vom Expander zur Pumpe zu übertragen.

## Revendications

1. Système d'utilisation de chaleur perdue pour un moteur à combustion interne, comprenant :
un cycle de Rankine (40) comprenant un trajet de circulation pour un fluide de travail, dans lequel sont séquentiellement insérés un évaporateur (34, 41) configuré pour chauffer et évaporer le fluide de travail par de la chaleur perdue du moteur à combustion interne (2), un détendeur (48) configuré pour détendre le fluide de travail fourni à partir de l'évaporateur, pour générer une force d'entraînement en rotation, un condenseur (43) configuré pour condenser le fluide de travail fourni par le détendeur, et une pompe (46, 49) configurée pour fournir, à l'évaporateur, le fluide de travail fourni à partir du condenseur ; et
un moteur-générateur (12) comprenant un rotor interne (16) et un rotor externe (18) situés à l'intérieur et à l'extérieur, respectivement, d'un stator (14) de celui-ci, dans lequel
au moins le moteur-générateur et le détendeur sont couplés l'un à l'autre avec l'un (16) des rotors interne et externe du moteur-générateur couplé à un arbre rotatif (45) du détendeur, et l'autre (18) des rotors interne et externe est couplé à un arbre rotatif (7) du moteur à combustion interne,
le moteur-générateur étant apte à provoquer chacun des rotors interne et externe pour fonctionner à la fois comme un générateur et un moteur selon les besoins.

2. Système d'utilisation de la chaleur perdue selon la revendication 1, dans lequel l'autre (18) des rotors interne et externe est couplé à l'arbre rotatif (7) du moteur à combustion interne avec une machine auxiliaire (24, 24') connectée en série ou en parallèle avec l'autre des rotors interne et externe.

3. Système d'utilisation de la chaleur perdue selon la revendication 2, comprenant en outre un cycle de réfrigération (20) comprenant un trajet de circulation pour un fluide réfrigérant, dans lequel est inséré un compresseur (24) configuré pour comprimer le réfrigérant en utilisant au moins de la force d'entraînement en rotation du moteur à combustion interne,
dans lequel la machine auxiliaire est le compresseur.

4. Système d'utilisation de la chaleur perdue selon la revendication 3, dans lequel :
le compresseur (24) est un compresseur de type à capacité variable, et
le système d'utilisation de la chaleur perdue comprend en outre une unité de commande de capacité de compression (80, 150) configurée pour commander de manière variable une capacité de compression du compresseur de type à capacité variable en fonction des conditions de fonctionnement du cycle de réfrigération (20).

5. Système d'utilisation de la chaleur perdue selon la revendication 3 ou 4, dans lequel un embrayage d'engagement-désengagement (6) est disposé entre le moteur à combustion interne (2) et le compresseur (24) et configuré pour établir et couper une transmission de force d'entraînement en rotation provenant du moteur-générateur vers le moteur à combustion interne à travers le compresseur en fonction d'un état de fonctionnement du moteur à combustion interne.

6. Système d'utilisation de la chaleur perdue selon l'une quelconque des revendications 1 à 5, dans lequel :
le détendeur (48) et la pompe (46) sont couplés ensemble de manière coaxiale dans un corps unifié, et
le moteur-générateur (12) et le corps unifié du détendeur et de la pompe sont couplés l'un à l'autre avec l'un (16) des rotors interne et externe couplé à un arbre rotatif (45) du corps unifié du détendeur et de la pompe, et l'autre (18) des rotors interne et externe est couplé à l'arbre rotatif (7) du moteur à combustion interne.

7. Système d'utilisation de la chaleur perdue selon l'une quelconque des revendications 1 à 5, comprenant en outre :
une unité de récupération d'énergie électrique (10, 11) comprenant une batterie configurée pour stocker une énergie électrique générée par le moteur-générateur (12) à la suite d'une rotation du détendeur (48) ou du moteur à combustion interne (2) ; et
une unité de commande de système (150) configurée pour commander un degré de récupération d'énergie électrique par l'unité de récupération d'énergie électrique.

8. Système d'utilisation de la chaleur perdue selon la revendication 7, dans lequel :
l'unité de récupération d'énergie électrique (10, 11) comprend une unité de détection de sortie de Rankine configurée pour détecter une sortie de Rankine générée par le cycle de Rankine (40), une unité de détection de quantité de charge de batterie configurée pour détecter la quantité de charge de la batterie, et une unité de sortie variable de moteur-générateur pour commuter une fonction de chacun des rotors interne et externe du moteur-générateur entre une fonction motrice et une fonction génératrice,
l'unité de commande de système (150) comprend une unité de calcul d'énergie électrique demandée à la batterie configurée pour calculer l'énergie électrique demandée à la batterie par l'unité de récupération d'énergie électrique, sur la base de la quantité de charge de la batterie détectée par l'unité de détection de quantité de charge de batterie, et une unité de commande de moteur-générateur configurée pour commander l'unité de sortie variable de moteur-générateur en fonction de l'énergie électrique demandée à la batterie calculée par l'unité de calcul d'énergie électrique demandée à la batterie, et
l'unité de commande du système commande l'unité de commande de moteur-générateur de telle sorte que la fonction de l'autre (18) des rotors interne et externe est commutée sur la fonction génératrice par l'unité de sortie variable de moteur-générateur lorsque l'énergie électrique demandée à la batterie calculée par l'unité de calcul d'énergie électrique demandée à la batterie est supérieure à une énergie électrique correspondant à la sortie de Rankine détectée par l'unité de détection de sortie de Rankine, et est commutée sur la fonction motrice par l'unité de sortie variable de moteur-générateur lorsque l'énergie électrique demandée à la batterie est inférieure à l'énergie électrique correspondant à la sortie de Rankine.

9. Système d'utilisation de la chaleur perdue selon la revendication 8, dans lequel :
l'unité de commande de moteur générateur (150) commande le moteur-générateur en fonction d'une valeur de consigne de sortie du générateur lorsque la fonction de l'autre (18) des rotors interne et externe est commutée sur la fonction génératrice, et commande l'unité de sortie variable de moteur-générateur en fonction d'une valeur de consigne de sortie du moteur lorsque la fonction de l'autre (18) des rotors interne et externe est commutée sur la fonction motrice, et
la valeur de consigne de sortie du générateur et la valeur de consigne de sortie du moteur sont chacune réglées sur la base d'une valeur absolue d'une différence entre l'énergie électrique demandée à la batterie et l'énergie électrique correspondant à la sortie de Rankine.

10. Système d'utilisation de la chaleur perdue selon la revendication 8 ou 9, dans lequel :
le cycle de Rankine comprend une machine auxiliaire entraînée électriquement (43a, 49),
l'unité de commande de système (150) comprend en outre une unité de commande d'entrée auxiliaire électrique du cycle de Rankine configurée pour commander une énergie électrique d'entrée vers la machine auxiliaire entraînée électriquement du cycle de Rankine, et
l'unité de commande de système (150) provoque l'unité de commande d'entrée auxiliaire électrique du cycle de Rankine pour arrêter un fonctionnement de la machine auxiliaire entraînée électriquement du cycle de Rankine lorsque l'énergie électrique correspondant à la sortie de Rankine détectée par l'unité de détection de sortie de Rankine est inférieure au moins à l'énergie électrique d'entrée vers la machine auxiliaire entraînée électriquement du cycle de Rankine, et provoque l'unité de commande d'entrée auxiliaire électrique du cycle de Rankine pour faire fonctionner la machine auxiliaire entraînée électriquement du cycle de Rankine lorsque l'énergie électrique correspondant à la sortie de Rankine est supérieure au moins à l'énergie électrique d'entrée vers la machine auxiliaire à entraînement électrique du cycle de Rankine.

11. Système d'utilisation de la chaleur perdue selon l'une quelconque des revendications 8 à 10, dans lequel :
le détendeur (48) et la pompe (46) sont couplés ensemble de manière coaxiale dans un corps unifié, et
le moteur-générateur (12) et le corps unifié du détendeur et de la pompe sont couplés l'un à l'autre avec l'un (16) des rotors interne et externe couplé à un arbre rotatif (45) de manière coaxiale prévu dans le corps unifié du détendeur et de la pompe, et l'autre (18) des rotors interne et externe est couplé à l'arbre rotatif (7) du moteur à combustion interne.

12. Système d'utilisation de la chaleur perdue selon la revendication 11, dans lequel :
l'unité de commande de moteur-générateur (150) commande l'unité de sortie variable de moteur-générateur de manière à commuter la fonction de l'un (16) des rotors interne et externe vers la fonction motrice ou la fonction génératrice, et
l'unité de commande de système (150) commande l'unité de commande de moteur-générateur de telle sorte que la fonction de l'un (16) des rotors interne et externe est commutée sur la fonction génératrice par l'unité de sortie variable de moteur-générateur lorsque la sortie de Rankine détectée par l'unité de détection de sortie de Rankine est supérieure ou égale à une valeur fixée, et est commutée sur la fonction motrice par l'unité de sortie variable de moteur-générateur lorsque la sortie de Rankine est inférieure à la valeur fixée.

13. Dispositif moteur-générateur destiné à être utilisé dans le système d'utilisation de la chaleur perdue selon l'une quelconque des revendications 1 à 12, comprenant :
le moteur-générateur (12), le détendeur (48) ; et
un arbre d'entrée-sortie (25) couplé à un arbre rotatif du moteur à combustion interne,
dans lequel l'un (16) des rotors interne et externe du moteur-générateur est couplé à l'arbre rotatif (45) du détendeur, et l'autre (18) des rotors interne et externe est couplé à l'arbre d'entrée-sortie,
le moteur-générateur étant apte à provoquer chacun des rotors interne et externe pour fonctionner à la fois comme un générateur et un moteur selon les besoins.

14. Dispositif moteur-générateur selon la revendication 13, dans lequel :
la pompe (46) du cycle de Rankine (40) est disposée entre le moteur-générateur (12) et le détendeur (48), et
la pompe comprend un arbre d'entraînement dont une extrémité est couplée au détendeur et dont l'autre extrémité est couplée à l'un (16) des rotors interne et externe.

15. Dispositif moteur-générateur selon la revendication 14, dans lequel un embrayage unidirectionnel (100) est interposé entre la pompe (46) et le détendeur (48) et configuré pour ne pas transmettre une force d'entraînement en rotation de la pompe vers le détendeur, mais pour transmettre une force d'entraînement en rotation du détendeur vers la pompe.
